(19) **Europäisches Patentamt**

**European Patent Office**

**Office européen des brevets**

(11) **EP 1 297 501 B1**

(12) **FASCICULE DE BREVET EUROPEEN**

(45) Date de publication et mention
de la délivrance du brevet:
**26.04.2006 Bulletin 2006/17**

(21) Numéro de dépôt: **01947559.9**

(22) Date de dépôt: **20.06.2001**

(51) Int Cl.:
***G07F 7/00*** (2006.01)

(86) Numéro de dépôt international:
**PCT/FR2001/001945**

(87) Numéro de publication internationale:
**WO 2001/099064 (27.12.2001 Gazette 2001/52)**

(54) **CONTROLE D'ACCES A UN MOYEN DE TRAITEMENT DE DONNEES**

ZUGRIFFSSTEUERUNG ZU EINEM DATENVERARBEITUNGSMITTEL

ACCESS CONTROL TO DATA PROCESSING MEANS

(84) Etats contractants désignés:
**DE ES FR GB IT**

(30) Priorité: **20.06.2000 FR 0007886**

(43) Date de publication de la demande:
**02.04.2003 Bulletin 2003/14**

(73) Titulaire: **GEMPLUS**
**13420 Gémenos Cedex (FR)**

(72) Inventeurs:
- **BIDAN, Christophe**
  **F-35235 THORIGNE-FOUILLARD (FR)**
- **GIRARD, Pierre**
  **F-13600 LA CIOTAT (FR)**
- **GUTERMAN, Pascal**
  **F-13360 ROQUEVAIRE (FR)**
- **NACCACHE, David**
  **F-75009 PARIS (FR)**
- **ROUSSEAU, Ludovic**
  **F-13400 AUBAGNE (FR)**

(56) Documents cités:
| | |
|---|---|
| **EP-A- 1 004 980** | **DE-A- 3 904 215** |
| **FR-A- 2 496 294** | **US-A- 4 786 790** |
| **US-A- 4 907 272** | **US-A- 6 021 201** |

**Description**

La présente invention concerne de manière générale tout moyen électronique de traitement de données dont les fonctionnalités, ou des services qui y sont liés, sont accessibles par un code confidentiel, dit également mot de passe ou code secret, qui est le plus souvent reçu par le moyen de traitement à la suite d'une composition sur le clavier d'un moyen d'accueil du moyen de traitement.

Par exemple, le moyen de traitement de données est une carte à microcontrôleur, dite également carte à circuit intégré ou carte à puce (Smart Card), telle qu'une carte de crédit pour terminal bancaire ou une carte de porte-monnaie électronique pour terminal de point de vente, ou pour tout autre terminal tel qu'un terminal radiotéléphonique mobile doté d'un lecteur de carte additionnelle, ou bien telle qu'une carte d'identité SIM (Subscriber Identity Mobile) dans un terminal radiotéléphonique mobile.

Plus particulièrement l'invention a trait à la sécurité du contrôle d'accès aux fonctionnalités de la carte à puce par un code confidentiel reçu par celle-ci de manière à le comparer à un code confidentiel secret associé à la carte à puce et actuellement pré-mémorisé dans celle-ci.

Un attaquant, une personne malintentionnée, souhaitant connaître le code confidentiel secret d'une carte à puce peut procéder à une analyse de consommation électrique (en anglais, Single Power Analysis SPA) en connectant un appareil de mesure de tension à l'interface électrique entre la carte à puce et son terminal d'accueil.

Dans une carte à puce selon la technique antérieure, le code confidentiel secret pré-mémorisé dans une mémoire non volatile de la carte à puce est manipulé au cours de la vérification de tout code confidentiel présenté en vue d'authentifier le véritable possesseur de la carte à puce. En particulier, le processeur dans la carte lit le code secret dans la mémoire non volatile et le compare au code reçu écrit temporairement en mémoire RAM de la carte à puce.

Les cartes à puce actuelles présentent ainsi des possibilités de fuites d'information résultant de l'enregistrement de caractéristiques de consommation énergétique de la carte à puce.

Il est connu notamment du document EP-00984955.5, un dispositif et un procédé dans lequel une carte comporte une fonction de cryptage unidirectionnelle utilisée pour dériver une clef depuis des données reçues par la carte a l'initialisation de celle-ci. Cette clef servant par la suite à déchiffrer les données reçues par la carte.

Il est en outre connu du document EP-A-1004980 de comparer dans un terminal un code confidentiel secret d'identification stocké dans une mémoire d'une carte à puce, après qu'il ait subi une transformation avec un code confidentiel secret d'identification entré au clavier du terminal et ayant subi la même fonction de transformation.

Une telle solution présente l'inconvénient de nécessiter une liaison cryptée établie entre la carte et le terminal afin d'éviter l'interception des codes confidentiels secrets.

De plus, ce type de solution ne permet pas de se prémunir d'un attaquant qui réussirait à avoir connaissance d'un code confidentiel secret transformé et qui pourrait ainsi usurper l'identité du titulaire de la carte à puce.

La présente invention vise à accroître la sécurité du contrôle du code confidentiel reçu par un moyen de traitement de données, tel que carte à puce, et à éviter toute manipulation du code secret dans le moyen de traitement de données.

A cette fin, un procédé pour accéder à un moyen de traitement de données associé à un code confidentiel secret et accessible en lui appliquant un code confidentiel présenté par un moyen d'accueil, est caractérisé en ce qu'il comprend les étapes suivantes :

- préalablement, implémentation d'une fonction de transformation de code dans le moyen de traitement; puis transformation du code secret en un code secret transformé selon la fonction de transformation et mémorisation du code secret transformé dans le moyen de traitement ; et
- à chaque utilisation du moyen de traitement, transformation du code présenté en un code présenté transformé par la fonction de transformation implémentée dans le moyen de traitement, et comparaison dans le moyen de traitement du code secret transformé au code présenté transformé.

Ainsi, au cours de l'utilisation du moyen de traitement, tel que carte à puce, le code secret n'y est pas mémorisé et n'est donc pas manipulé dans la carte lors de toute présentation du code confidentiel présenté.

Comme on le verra en détail dans la suite, la fonction de transformation peut être irréversible, un hachage, liée à un nombre aléatoire fixé lors de la création de la carte ou bien dépendante d'un deuxième nombre aléatoire variable à chaque présentation du code présenté, appliquée itérativement en fonction du nombre de présentations précédentes du code présenté, une permutation prédéterminée de parties de code, ou une fonction homomorphique. Certaines de ces caractéristiques de fonction de transformation peuvent être combinées entre elles.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme schématique montrant un système de mise en oeuvre du procédé de contrôle d'accès selon l'invention dans le contexte d'une carte à puce ; et
- la figure 2 est un algorithme des étapes principales du procédé de contrôle d'accès selon plusieurs réalisations de l'invention.

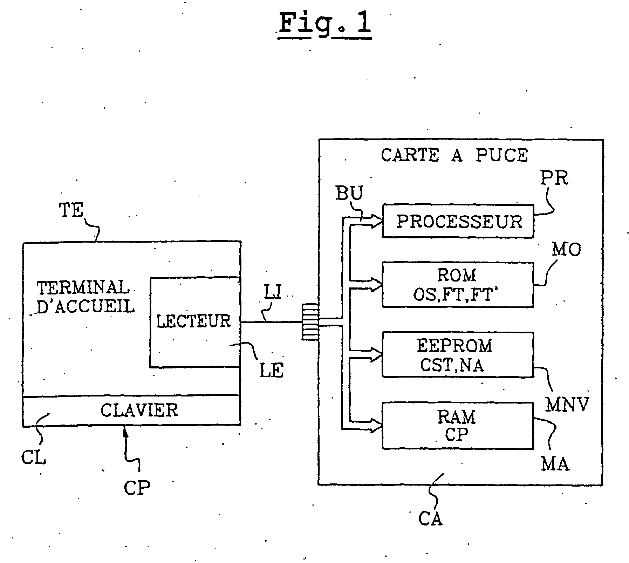

Selon la réalisation illustrée à la figure 1, un moyen de traitement de données électronique est constitué par une carte à puce CA dont la "puce" est composée d'un microcontrôleur. Schématiquement, le microcontrôleur comporte une unité de traitement centrale CPU formée par un microprocesseur PR, une mémoire MO de type ROM incluant un système d'exploitation OS de la carte et notamment des algorithmes d'application de communication et d'authentification spécifiques, une mémoire non volatile MNV de type programmable et effaçable, comme une mémoire EEPROM, qui contient des données notamment liées au possesseur de la carte et au fournisseur de la carte, et une mémoire MA de type RAM destinée à recevoir notamment des données d'un terminal d'accueil TE de la carte. Tous les composants PR, MO, MNV et MA sont reliés entre eux par un bus interne BU.

Le terminal d'accueil TE, tel qu'un terminal bancaire ou un terminal téléphonique, est équipé d'un clavier CL pour notamment composer un code confidentiel CP, dit également code soumis, à présenter à la carte. Dans un lecteur LE du terminal TE est introduite une partie de la carte CA contenant le microcontrôleur et supportant typiquement huit contacts électriques d'une liaison électrique LI entre le lecteur LE et le bus BU interne à la carte CA lorsque la carte est du type à contact.

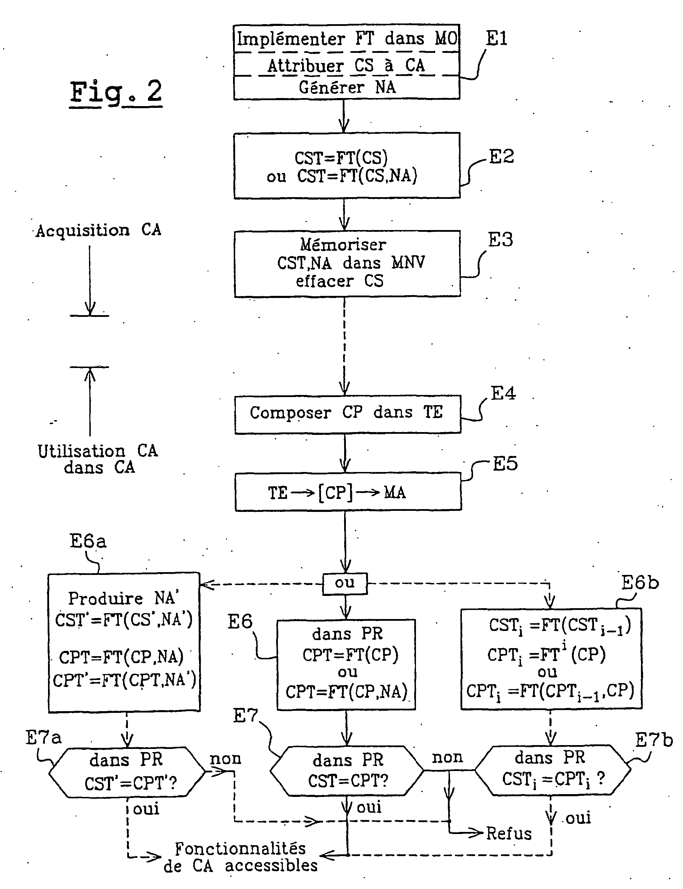

En référence maintenant à la figure 2, le procédé de contrôle d'accès selon une réalisation préférée de l'invention pour la carte à puce CA montrée à la figure 1 comprend essentiellement sept étapes E1 à E7.

Les premières étapes E1 à E3 sont préalablement réalisées, chez le fournisseur de carte, lors de la fabrication de la carte puis lors de l'acquisition de la carte CA, par exemple lors de l'abonnement à un service accessible par les fonctionnalités de la carte.

Lors de la fabrication de la carte, une fonction de transformation de code confidentiel prédéterminée FT pour transformer ultérieurement le code confidentiel présenté CP dans la carte en un code présenté transformé CPT, comme on le verra dans la suite est implémentée dans la mémoire MO de la carte. La carte CA est remise avec la fonction de transformation implémentée FT par le fabricant de la carte au fournisseur de carte. En fonction de données du fabricant de carte notamment, le fournisseur de carte attribue un code confidentiel secret CS de préférence chiffré, par exemple à quatre chiffres, à la carte CA, qui est déchiffré à l'étape E1.

Aussitôt, le processeur PR de la carte transforme le code confidentiel secret CS en un code secret transformé $CST = FT(CS)$ selon la fonction de transformation prédéterminée FT dont plusieurs exemples seront décrits en détail dans la suite de la description. A l'étape E3, le code secret transformé CST est écrit dans la mémoire non volatile MNV de la carte CA. Le code secret CS n'est pas ainsi conservé en clair dans la carte.

Ainsi, la transformation du code confidentiel secret, lequel était constamment contenu en mémoire non volatile dans les cartes à puce de la technique antérieure, en le code secret transformé CST est exécutée avant toute présentation du code présenté CP à la carte, et le code secret transformé CST, et non le code secret, est conservé en mémoire non volatile MNV.

Les étapes E4 à E7 sont effectuées après l'introduction de la carte CA dans le lecteur LE du terminal d'accueil TE qui est ainsi relié par la liaison électrique LI et le bus interne BU au microcontrôleur de la carte CA.

Lors de chaque utilisation de la carte, un code présenté CP qui doit être normalement identique au code secret, est composé sur le clavier CL du terminal TE à l'étape E4 afin de vérifier le code présenté dans la carte CA. Soit au fur et à mesure de la composition des chiffres du code présenté, par exemple au nombre de quatre, soit en bloc, le terminal TE transmet le code présenté CP à la carte CA à travers la liaison LI et le bus BU afin qu'il soit écrit dans la mémoire RAM MA, à l'étape E5.

A l'étape suivante E6, le processeur PR transforme le code présenté CP inscrit dans la mémoire MA en un code présenté transformé CPT selon la fonction de transformation FT implémentée dans la carte CA.

Finalement, le processeur PR lit le code secret transformé CST dans la mémoire MNV et le compare au code présenté transformé CPT qui vient d'être déterminé, à l'étape E7. Si les codes comparés CST et CPT sont identiques, les fonctionnalités de la carte CA sont accessibles, par exemple pour accéder à un service, tel qu'un service de paiement ou un service téléphonique. Sinon, lorsque les codes comparés CST et CPT sont différents, d'autres tentatives de composition d'un autre code présenté en nombre limité peuvent être effectuées.

Selon une première réalisation, la fonction de transformation de code FT est un hachage H. Par exemple, le mot à quatre bits de chacun des quatre chiffres, ou plus généralement de l'octet de l'un des caractères, du code confidentiel CS, CP est transformé par hachage en plusieurs octets, typiquement quelques dizaines d'octets, et le code transformé CST, CPT comprend quatre ensembles de quelques dizaines d'octets.

En outre, la fonction de hachage H ne comporte pas de fonction réciproque, c'est-à-dire est irréversible. Une telle fonction est dite également "fonction à sens unique" qui est une fonction relativement aisée à calculer mais considérablement plus difficile à inverser. En d'autres termes, il n'existe aucune fonction $H^{-1}$, ou il est très difficile de trouver

une fonction H$^{-1}$ telle que :

CF = H$^{-1}$ [H(CF)], où CF représente un code confidentiel quelconque.

Le caractère à sens unique de la fonction de hachage interdit ainsi de déchiffrer le code transformé CST = H (CS) mémorisé dans la carte CA pour retrouver le code secret d'origine CS.

Le hachage permet de s'affranchir notamment d'une recherche d'un code confidentiel caractère par caractère, c'est-à-dire octet par octet. La connaissance d'un caractère haché ne permet pas de déduire les autres caractères du code secret.

Selon une deuxième réalisation, la fonction de transformation de code FT s'applique sur le code confidentiel CS, CP et un nombre aléatoire NA. La fonction de transformation est par exemple une fonction logique, telle que la fonction OU-Exclusif (XOR).

Le code transformé CST, CPT résulte de l'application du code confidentiel respectif CS, CP et d'un nombre aléatoire NA à la fonction de transformation FT. Le nombre aléatoire NA est produit par un générateur aléatoire associé au processeur PR, une fois pour toute à la création de la carte CA, lors de l'attribution et de l'écriture du code secret CS à l'étape E1. Le processeur PR transforme le code secret CS en un code secret transformé CST = FT(CS, NA) à l'étape E2 pour le mémoriser avec le nombre aléatoire NA dans la mémoire MNV.

Par exemple, la fonction de transformation FT peut être une combinaison du code confidentiel CS, CP et du nombre aléatoire NA. Le nombre aléatoire NA peut être un élément de diversification du code secret CS.

A l'étape E6, le processeur PR lit non seulement le code présenté CP dans la mémoire MA mais également le nombre aléatoire NA dans la mémoire MNV de manière à produire le code présenté transformé CPT = FT(CP, NA).

Selon cette deuxième réalisation, deux cartes à puce associées à des codes confidentiels secrets identiques sont associés à des nombres aléatoires différents. Les nombres aléatoires étant a priori différents pour les deux cartes, les effets de la manipulation de ces nombres aléatoires ne peuvent servir à la caractérisation des cartes. En effet, l'analyse de la consommation électrique de la carte à puce n'est pas représentative du code secret en clair, mais est représentative du code secret transformé selon une transformation connue de l'attaquant. A partir du code secret transformé CST ne peut être déduite l'information sur le code secret CS parce que l'élément de diversification NA est méconnu de l'attaquant.

De préférence, à chaque code secret CS correspond un nombre aléatoire respectif NA. Ainsi avantageusement, lorsque le code secret associé à une carte est modifié, le nombre aléatoire NA est également modifié. Par exemple si deux chiffres d'un code secret sont inversés, les deux nombres aléatoires correspondant à ces deux versions de code secret sont différents. Cette variante permet d'éviter de reconnaître un nombre aléatoire dans une première carte grâce à la manipulation du nombre aléatoire dans une autre carte associée à un code confidentiel commun avec la première carte.

Selon une troisième réalisation, le nombre NA est généré initialement et un deuxième nombre aléatoire NA' est produit par le générateur aléatoire associé au processeur PR dans la carte CA, avant la transformation du code présenté CP, à chaque vérification du code présenté CP. Les étapes E6 et E7 sont alors remplacées par des étapes E6a et E7a montrées également à la figure 2. D'une part, la fonction de transformation est appliquée au code secret transformé CST mémorisé préalablement et au deuxième nombre aléatoire NA' pour déterminer un deuxième code secret transformé CST' = FT(CST, NA'). D'autre part, la fonction de transformation est appliquée une première fois au code présenté reçu CP et au premier nombre aléatoire produit préalablement NA pour produire un code présenté transformé intermédiaire CPT' = FT(CP, NA), puis est appliquée une deuxième fois au code présenté transformé intermédiaire CPT et au deuxième nombre aléatoire NA' pour produire le code présenté transformé CPT' = FT(FT(CP, NA), NA') = FT(CPT, NA'). Puis les codes CST' et CPT' sont comparés à l'étape E7a.

La troisième réalisation du procédé selon l'invention garantit qu'au sein de la carte à puce, il n'y a jamais la même valeur de code confidentiel transformé CST', et donc que la vérification du code confidentiel présenté CP ne s'exécute jamais de la même manière dans la carte à puce CA.

Par exemple, la fonction de transformation FT est un opérateur arithmétique simple tel que l'addition, soit :

$$\texttt{CST' = CST + NA' avec CST = CS + NA et NA en}$$

$$\texttt{mémoire MNV, et}$$

$$\texttt{CPT = (CP + NA) + NA'.}$$

Une quatrième réalisation proche de la dernière variante exposée ci-dessus consiste après la première vérification du code présenté CP résultant de la comparaison du code secret transformé CST = FT (CS) et du code présenté transformé CPT = FT(CP), à mémoriser le code secret transformé CST et à appliquer pour chaque présentation du code présenté, la fonction de transformation de code FT au code secret transformé précédemment mémorisé. Ainsi pour une deuxième présentation, le processeur PR compare les codes transformés $CST_2$ = FT(CST), qui est mémorisé, et $CPT_2$ = FT(CPT), puis pour une troisième présentation succédant à une deuxième vérification positive compare les codes transformés $CST_3$ - FT($CST_2$), qui est mémorisé, et $CPT_3$ = FT($CPT_2$) = FT(FT(CPT)) = FT (FT (FT (CP))), et ainsi de suite à chaque présentation du code présenté, le code secret transformé $CST_i$ est mémorisé et est comparé au code présenté transformé $CPT_i$ = $FT^i$(CP) résultant des applications précédentes. Après chaque vérification, la valeur du code secret transformé qui est mémorisée dans la mémoire MNV est différente de celle qui était mémorisée à la vérification précédente.

Dans la quatrième réalisation, comme montré aux étapes E6b et E7b remplaçant les étapes E6 et E7 dans la figure 2 à partir de la deuxième présentation, le processeur PR à la 1 présentation du code CP dans la carte CA applique i fois la fonction FT au code présenté CP ce qui peut être relativement long ; par exemple la fonction FT est une fonction modulo d'un nombre premier P.

Afin de réduire le temps de calcul de la fonction $FT^i$, la fonction FT peut être la fonction exposant modulo le nombre entier prédéterminé P. Ainsi, à chaque présentation du code présenté, les applications précédentes de la fonction de transformation au code présenté CP sont remplacées dans le processeur PR par une application de la fonction de transformation au dernier code présenté $CPT_{i-1}$ et au code présenté CP afin de produire le code présenté transformé $CPT_i$ = FT ($CPT_{i-1}$, CP) = FT[$(CPT)^{i-1}$, CP] modulo P, au lieu d'appliquer i fois la fonction FT au code présenté CP. Puis lorsqu'à l'issue de la comparaison (étape E7b) les codes transformés comparés $CST_i$ et $CPT_i$ sont identiques, ceux-ci sont mémorisés dans la mémoire MNV à la place des codes précédents $CST_{i-1}$ et $CPT_{i-1}$.

Selon un autre exemple, la fonction de transformation de code FT peut être une fonction arithmétique simple, telle qu'addition $CPT_i$ = (CP + $CPT_{i-1}$) modulo P.

En variante, au lieu de mémoriser le code présenté transformé $CPT_i$, les applications de la fonction de transformation au code présenté CP sont remplacées par une application d'une fonction de transformation équivalente à la $i^{ème}$ itération $FT^i$ de la fonction de transformation afin de produire un code présenté transformé $CPT_i$. Cette variante concerne ainsi une fonction $FT^i$ dépendante directement de l'indice i et du code présenté. Par exemple, la fonction FT est l'addition d'un nombre aléatoire NA, soit $\mathtt{CST_i\ =\ CST_{i-1}\ +\ NA,}$ et $\mathtt{CPT_i\ =\ CP\ +\ i.NA.}$

A l'issue de ces deux transformations, le nombre i d'itérations est mémorisé avec le code secret transformé $CPT_i$ résultant de l'application précédente dans la mémoire MNV, et le code présenté transformé $CPT_i$ est comparé au code secret transformé mémorisé $CST_i$.

Comme pour la production d'un nombre aléatoire à chaque présentation du code CP, la détermination des codes transformés $CPT_i$ et $CST_i$ de manière différente de celle des codes transformés $CPT_{i-1}$ et $CST_{i-1}$ à la présentation précédente annihile toute déduction du code transformé à partir du code transformé précédent qui dépend du nombre de présentations du code présenté. Ainsi, à chaque présentation, le code secret transformé mémorisé est différent de celui mémorisé à la présentation précédente.

Selon une cinquième réalisation, chaque code est considéré comme partagé en plusieurs parties, telles que quatre octets de chiffre par exemple. Au début du procédé, le code secret CS est transformé en lui appliquant une fonction de transformation de code FT de manière à changer l'ordre successif de ses octets, soit par exemple le code secret transformé CST résultant de la permutation prédéterminée suivante : CST=FT[CS(OS1, OS2, OS3, OS4)] = (OS2, OS4, OS1, OS3).

Lors de la première présentation du code présenté CP, la même permutation est appliquée au code CP en modifiant l'ordre de ses octets OP1 à OP4 : CPT=FT[CP(OP1, OP2, OP3, OP4)] = (OP2, OP4, OP1, OP3).

Au cours de la première comparaison à l'étape E7, les deuxièmes octets OS2 et OP2 sont comparés, puis les quatrièmes octets OS4 et OP4 sont comparés, les premiers octets OS1 et OP1 sont comparés et enfin les troisièmes octets OS3 et OP3 sont comparés. Si l'une des quatre comparaisons d'octets est négative, l'accès au service de la carte est refusé.

Lors d'une deuxième vérification du code présenté succédant à une première utilisation de la carte, la fonction de transformation FT modifie à nouveau l'ordre des octets transformé en commençant par les quatrièmes octets OS4. Ainsi le code secret transformé lors de cette deuxième présentation devient le suivant : CST=FT[CS(OS2, OS4, OS1, OS3)] = (OS4, OS3, OS2, OS1).

Le code présenté subit alors deux permutations pour obtenir le code présenté transformé suivant : CPT=FT [CP(OP1, OP2, OP3, OP4)] = (OP4, OP3, OP2, OP1).

Ainsi, à chaque présentation du code présenté CP, la permutation est appliquée au code secret transformé CST résultant de la dernière présentation, et la permutation est également appliquée au code présenté CP, mais un nombre de fois égal au nombre de permutations/présentations précédentes du code présenté. Les parties correspondantes des codes secret et présenté permutés CST, CPT sont comparées deux à deux et le code secret permuté CST est mémorisé dans la carte CA lorsque les codes comparés CST et CPT sont identiques.

Les octets OS1 à OS4 du code secret CS ne sont jamais ainsi manipulés dans le même ordre lors de deux vérifications successives du code présenté.

Afin d'augmenter la sécurité, la fonction de transformation FT à laquelle est appliqué le code secret CS à l'étape E2 ou CST à l'étape E6a, ou bien à laquelle est appliqué tout autre code secret transformé $CST_{i-1}$ à l'étape E6b selon les réalisations précédentes, est homomorphique de la fonction FT, notée ci-après FT', à laquelle est appliqué le code présenté CP à l'étape E6 ou à l'étape E6a, ou $CPT_{i-1}$ à l'étape E6b.

Chaque fournisseur de carte peut choisir sa propre fonction de transformation FT homomorphique d'une fonction prédéterminée FT', ou bien un couple de fonctions [FT, FT'], ce qui le protège contre des attaques.

Selon un premier exemple, les fonctions FT et FT' sont des élévations au carré de la somme d'un code confidentiel et d'un nombre aléatoire NA. Lors de la mise en service de la carte à l'étape E2 ou E62, ou lors d'un changement du code secret associé à la carte, le code secret CS subit la transformation FT suivante :

$$CST = FT(CS, NA) = CS^2 + 2\ CS.NA + NA^2,$$

c'est-à-dire le code secret transformé CST résulte des calculs successifs suivants : calcul de CS au carré, calcul du double produit 2 CS.NA, calcul de NA au carré, et addition des trois produits précédents.

La fonction FT' appliquée au code présenté CP est également une élévation au carré de la somme de ce code avec le nombre aléatoire NA. Toutefois, le calcul du code présenté transformé CPT suit un processus différent du calcul du code secret par la transformation FT. Ainsi le code présenté CP est calculé selon la formule :

$$CPT = FT'(CP, NA) = (CP + NA)^2,$$

en commençant à calculer la somme CP + NA, puis en multipliant cette somme par elle-même pour obtenir le code présenté CPT.

Ainsi le processus de calcul du code présenté CPT à l'étape E6 est différent de celui du code secret CST à l'étape E2 et donc les vaguelettes correspondant à ces deux transformations sont différentes.

Selon un deuxième exemple, la fonction FT appliquée sur le code secret CS est telle que $CST = NB^{CS} \times NB^{NA}$, c'est-à-dire est appliquée en calculant le produit du nombre NB par lui-même CS fois et le produit de NB par lui-même NA fois, et en multipliant les deux produits précédents. Le code présenté transformé CPT est calculé selon la formule $CPT = FT'(CP, NA) = NB^{CP+NA}$, c'est-à-dire en calculant le produit de NB par lui-même CP+NA fois. NB désigne un nombre quelconque qui est transmis avec le code secret CS et le nombre aléatoire NA à la carte CA pour y être écrit dans la mémoire MNV, à l'étape E3.

Dans la description ci-dessus, il sera compris que la carte à puce recouvre tous les types connus de carte à puce, dites également cartes à microcontrôleur, comme les cartes à contact ou sans contact énoncées ci-après à titre d'exemple non limitatif : cartes de crédit (Carte Bleue), cartes de paiement, cartes téléphoniques, cartes SIM, cartes "additionnelles", cartes de centrale d'achat, cartes de jeu, etc. Plus généralement, l'invention concerne non seulement des cartes à puce mais également d'autres objets électroniques portables désignés indifféremment par moyens de traitement de données, électroniques, tels que assistants ou organiseurs électroniques, porte-monnaie électroniques, jetons, calculettes, etc.

Le terminal d'accueil du moyen de traitement de données électronique peut être par exemple du type terminal informatique, ordinateur personnel notamment portable, terminal bancaire, terminal de point de vente, terminal radiotéléphonique, dispositif de contrôle d'accès à un local ou à une armoire forte, etc. Le moyen d'accueil peut être éloigné du moyen de traitement de données, ceux-ci étant reliés par tout moyen de transmission de données.

Le code confidentiel au sens de l'invention est également désigné dans certains contextes comme mot de passe (password), ou code secret, ou bien numéro d'identité personnel PIN (Personal Identification Number) ou CHV (Card Holder Verification) ou identificateur PTI (Personal Telecommunication Identifier) notamment pour des cartes SIM de terminal radiotéléphonique.

Le code confidentiel reçu est en général un code alphanumérique. Il peut être appliqué au moyen de traitement de données, carte à puce ou objet électronique portable, par tout moyen de saisie de code connu, autre qu'un clavier à touches, par exemple par la voix et reconnaissance vocale, ou bien par reconnaissance d'une signature biométrique, par exemple au moins une empreinte digitale.

**Revendications**

1. Procédé pour accéder à un moyen de traitement de données (CA) associé à un code confidentiel secret (CS) et accessible en lui appliquant un code confidentiel présenté (CP) par un moyen d'accueil (TE), **caractérisé en ce qu'**il comprend les étapes suivantes :

   - préalablement, implémentation (E1) d'une fonction de transformation de code (FT) dans le moyen de traitement (CA), puis transformation (E2) du code secret (CS) en un code secret transformé (CST) selon la fonction de transformation (FT) et mémorisation (E3) du code secret transformé (CST) dans le moyen de traitement ; et
   - à chaque utilisation du moyen de traitement (CA), transformation (E6) du code présenté (CP) en un code présenté transformé (CPT) par la fonction de transformation implémentée dans le moyen de traitement, et comparaison dans le moyen de traitement (E7) du code secret transformé au code présenté transformé.

2. Procédé conforme à la revendication 1, selon lequel la fonction de transformation est irréversible.

3. Procédé conforme à la revendication 1 ou 2, selon lequel la fonction de transformation est un hachage.

4. Procédé conforme à l'une quelconque des revendications 1 à 3, selon lequel chaque code transformé (CST, CPT) résulte de l'application du code confidentiel respectif (CS, CP) et d'un nombre aléatoire (NA) à la fonction de transformation (FT), le nombre aléatoire (NA) étant pré-mémorisé avec le code secret transformé (CST) dans le moyen de traitement (CA).

5. Procédé conforme à la revendication 4, selon lequel deux moyens de traitement de données (CA) associés à des codes confidentiels secrets (CS) identiques sont associés à des nombres aléatoires différents (NA).

6. Procédé conforme à la revendication 4 ou 5, selon lequel le nombre aléatoire (NA) est modifié lorsque le code secret (CS) associé au moyen de traitement (CA) est modifié.

7. Procédé conforme à l'une quelconque des revendications 1 à 3, selon lequel le code secret transformé (CST) mémorisé préalablement résulte de l'application du code secret (CS) et d'un premier nombre aléatoire (NA) à la fonction de transformation (FT), un deuxième nombre aléatoire (NA') est produit (E6a) dans le moyen de traitement (CA) avant chaque transformation du code présenté, puis un deuxième code secret transformé (CST') est déterminé en appliquant le code secret transformé mémorisé (CST) et le deuxième nombre aléatoire (NA') à la fonction de transformation, et le code présenté transformé (CPT') est déterminé en appliquant le code présenté (CP) et le premier nombre aléatoire (NA) à la fonction de transformation pour produire un code présenté transformé intermédiaire (CPT) et en appliquant le code présenté transformé intermédiaire (CPT) et le deuxième nombre aléatoire à la fonction de transformation, le deuxième code secret transformé (CST') étant comparé au code présenté transformé (CPT').

8. Procédé conforme à l'une quelconque des revendications 1 à 6, selon lequel pour chaque présentation du code présenté, les étapes suivantes sont exécutées :

   - application (E6b) de la fonction de transformation (FT) au code secret transformé précédemment mémorisé ($CST_{i-1}$),
   - applications (E6b) de la fonction de transformation (FT) au code présenté (CP) autant de fois que le nombre de présentations précédentes du code présenté,
   - comparaison (E7b) du code secret transformé ($CST_i$) et du code présenté transformé ($CPT_i$) résultant des applications précédentes, et
   - mémorisation du code secret transformé ($CST_i$) dans le moyen de traitement (CA).

9. Procédé conforme à la revendication 8, selon lequel les applications de la fonction de transformation au code présenté (CP) sont remplacées par une application d'une fonction de transformation équivalente à la $i^{ème}$ itération de la fonction de transformation (FT) afin de produire un code présenté transformé ($CPT_i$) à comparer (E7b) avec le code secret transformé (CSTi), et le nombre i d'itérations est mémorisé avec le code secret transformé. ($CPT_i$) résultant de l'application précédente dans le moyen de traitement (CA).

10. Procédé conforme à l'une quelconque des revendications 1 à 3, selon lequel la fonction de transformation (FT) consiste à partager chaque code (CS, CP) en plusieurs parties et à appliquer une permutation prédéterminée sur des parties du code, et selon lequel à chaque présentation du code présenté (CP), la permutation est appliquée au code secret transformé (CST) résultant de la dernière présentation, la permutation est appliquée au code présenté un nombre de fois égal au nombre de permutations précédentes du code présenté, les parties correspondantes des codes secret et présenté permutés (CST, CPT) sont comparées deux à deux, et le code secret permuté (CST) est mémorisé dans le moyen de traitement (CA).

11. Procédé conforme à l'une quelconque des revendications 1 à 10, selon lequel la fonction de transformation (FT) à laquelle est appliqué le code secret (CS) est homomorphique de la fonction de transformation (FT') à laquelle est appliqué le code présenté (CP).

**Patentansprüche**

1. Verfahren, um auf ein Datenverarbeitungsmittel (CA) zuzugreifen, das mit einer Geheimnummer (CS) verknüpft ist, und zugänglich ist, indem eine präsentierte Geheimnummer (CP) durch ein Empfangsmittel (TE) angewendet wird, **dadurch gekennzeichnet, dass** es folgende Schritte umfasst:

   - vorab die Implementierung (E1) einer Code-Transformationsfunktion (FT) in das Datenverarbeitungsmittel (CA), dann die Transformation (E2) der Geheimnummer (CS) in eine transformierte Geheimnummer (CST) je nach Transformationsfunktion und Speicherung (E3) der transformierten Geheimnummer (CST) im Datenverarbeitungsmittel transformiert;
   - bei jeder Benutzung des Datenverarbeitungsmittels (CA) Transformation (E6) der präsentierten Nummer (CP) in eine transformierte präsentierte Nummer (CPT) mittels der Transformationsfunktion, die im Datenverarbeitungsmittel implementiert ist, und im Datenverarbeitungsmittel (E7) Vergleich der transformierten Geheimnummer mit der präsentierten transformierten Nummer.

2. Verfahren nach Patentanspruch 1, in dem die Transformationsfunktion irreversibel ist.

3. Verfahren nach Patentanspruch 1 oder 2, in dem die Transformationsfunktion eine Zerhackungsfunktion ist.

4. Verfahren nach einem der Patentansprüche 1 bis 3, in dem sich jede transformierte Nummer (CST, CPT) aus der Anwendung der jeweiligen Geheimnummer (CS, CP) und einer Zufallszahl (NA) auf die Transformationsfunktion (FT) ergibt, wobei die Zufallszahl (Na) mit der transformierten Geheimnummer (CST) im Datenverarbeitungsmittel (CA) vorgespeichert wird.

5. Verfahren nach Patentanspruch 4, in dem die beiden Datenverarbeitungsmittel (CA), die mit identischen Geheimnummern (CS) verknüpft sind, mit unterschiedlichen Zufallszahlen (NA) verknüpft werden.

6. Verfahren nach einem der Patentansprüche 4. oder 5, in dem die Zufallszahl (NA) geändert wird, wenn die Geheimnummer, die an das Datenverarbeitungsmittel (CA) geknüpft ist, verändert wird.

7. Verfahren nach einem der Patenansprüche 1 bis 3, in dem sich die vorher gespeicherte transformierte Geheimnummer (CST) us der Anwendung der Geheimnummer (CS) und einer erste Zufallszahl (NA) auf die Transformationsfunktion (FT) ergibt, in dem eine zweite Zufallszahl (NA') (E6a) im Datenverarbeitungsmittel (CA) vor der Transformation der präsentierten Nummer erzeugt wird, und in der eine zweite transformierte Geheimnummer (CST') durch Anwenden der gespeicherten transformierten Geheimnummer (CST) und der zweiten Zufallsnummer (NA') auf die Transformationsfunktion erzeugt wird, und in dem die transformierte präsentierte Nummer (CPT') durch Anwenden der präsentierten Nummer (CP) und der ersten Zufallsnummer (NA) auf die Transformationsfunktion festgelegt wird, um einen transformierten präsentierten Zwischencode (CPT) zu erzeugen und durch Anwenden des transformierten präsentierten Zwischencodes (CPT) und der zweiten Zufallszahl auf die Transformationsfunktion, und in dem die zweite transformierte Geheimnummer (CST') mit der präsentierten transformierten Nummer (CPT') verglichen wird.

8. Verfahren nach einem der Patentansprüche 1 bis 6, in dem für jede Präsentation der präsentierten Nummer folgende Schritte ausgeführt werden:

   - Anwendung (E6b) der Transformationsfunktion (FT) auf die vorher gespeicherte transformierte Geheimnummer (CST$_{i-1}$),

- Anwendung (E6b) der Transformationsfunktion (FT) auf die präsentierte Nummer (CP) so oft, wie die präsentierte Nummer vorher präsentiert wurde,
- Vergleich (E7b) der transformierten Geheimnummer (CST$_i$) mit der präsentierten transformierten Nummer (CPT$_i$), die sich aus den vorhergehenden Anwendungen ergibt, und
- Speicherung der transformierten Geheimnummer (CST$_i$) imDatenverarbeitungsmittel (CA).

9. Verfahren nach Patentanspruch 8, in dem die Anwendungen der Transformationsfunktion auf die präsentierte Nummer (CP) ersetzt wird durch die Anwendung einer gleichwertigen Transformationsfunktion auf die x. Wiederholung der Transformationsfunktion (FT), um eine präsentierte transformierte Nummer (CPT$_i$) zu erzeugen, die (E7b) mit der transformierten Geheimnummer (CST$_i$) zu vergleichen ist. Die Anzahl x der Wiederholungen wird mit der transformierten Geheimnummer (CPT$_i$), die sich aus der vorhergehenden Anwendung ergibt, im Datenverarbeitungsmittel (Ca) gespeichert.

10. Verfahren nach einem der Patentansprüche 1 bis 3, in dem die Transformationsfunktion (FT) darin besteht, jede Nummer (CS, CP) in mehrere Teile zu untergliedern und eine vorher festgelegte Permutation auf die Teile der Nummer anzuwenden, der zufolge bei jeder Präsentation der präsentierten Nummer (CP) die Permutation auf die transformierte Geheimnummer (CST) angewendet wird, die sich aus der letzten Präsentation ergibt. Die Permutation wird auf die präsentierte Nummer so oft angewendet, wie es vorher Permutationen der präsentierten Nummer gab. Die entsprechenden Teile der permutierten Geheimnummer und der permutierten präsentierten Nummer (CST) werden im Datenverarbeitungsmittel (CA) gespeichert.

11. Verfahren nach einem der Patentansprüche 1 bis 10, demzufolge die Transformationsfunktion (FT) auf welche die Geheimnummer (CS) angewendet wird, homomorph mit der Transformationsfunktion (FT') ist, auf die die präsentierte Nummer (CP) angewendet wird.

**Claims**

1. Method for accessing data-processing means (CA) associated with a secret confidential code (CS) and accessible through application of a presented confidential code (CP) via reception means (TE), **characterised in that** it includes the following steps:

   - previously, implementation (E1) of a code transformation function (FT) in the processing means (CA), followed by transformation (E2) of the secret code (CS) into a transformed secret code (CST) according to the transformation function (FT) and memorisation (E3) of the transformed secret code (CST) in the processing means; and
   - every time the processing means (CA) are used, transformation (E6) of the presented code (CP) into a transformed presented code (CPT) by means of the transformation function implemented in the processing means, and comparison in the processing means (E7) of the transformed secret code with the transformed presented code.

2. Method according to claim 1, according to which the transformation function is irreversible.

3. Method according to claim 1 or 2, according to which the transformation function is a hashing process.

4. Method according to any one of the claims from 1 to 3, according to which each transformed code (CST, CPT) results from the application of the respective confidential code (CS, CP) and a random number (NA) to the transformation function (FT), the random number (NA) being pre-memorised with the transformed secret code (CST) in the processing means (CA).

5. Method according to claim 4, according to which two data-processing means (CA) associated with identical secret confidential codes (CS) are associated with different random numbers (NA).

6. Method according to claim 4 or 5, according to which the random number (NA) is modified when the secret code (CS) associated with the processing means (CA) is modified.

7. Method according to any one of the claims from 1 to 3, according to which the previously memorised transformed secret code (CST) results from applying the secret code (CS) and a first random number (NA) to the transformation function (FT), a second random number (NA') is produced (E6a) in the processing means (CA) before each transformation of the presented code, then a second transformed secret code (CST') is determined by applying the memorised transformed secret code (CST) and the second random number (NA') to the transformation function, and the transformed presented code (CPT') is determined by applying the presented code (CP) and the first random number (NA) to the transformation function so as to produce an intermediate transformed presented code (CPT) and by applying the intermediate transformed presented code (CPT) and the second random number to the transformation function, the second transformed secret code (CST') being compared with the transformed presented code (CPT').

8. Method according to any one of the claims from 1 to 6, according to which the following steps are performed for each presentation of the presented code:

- applying (E6b) the transformation function (FT) to the previously memorised transformed secret code ($CST_{i-1}$),
- applying (E6b) the transformation function (FT= to the presented code (CP) as many times as the number of previous presentations of the presented code,
- comparing (E7b) the transformed secret code ($CST_i$) and the transformed presented code ($CPT_i$) that result from the preceding applications, and
- memorising the transformed secret code ($CST_i$) in the processing means (CA).

9. Method according to claim 8, according to which the applications of the transformation function to the presented code (CP) are replaced with an application of a transformation function equivalent to the $i^{th}$ iteration of the transformation function (FT) so as to produce a transformed presented code ($CPT_i$) to be compared (E7b) with the transformed secret code ($CST_i$), and the number i of iterations is memorised together with the transformed secret code ($CST_i$) that results from the preceding application in the processing means (CA).

10. Method according to any one of the claims from 1 to 3, according to which the transformation function (FT) consists of splitting each code (CS, CP) into several parts and applying a predetermined permutation to the parts of the code, and according to which, at each presentation of the presented code (CP), the permutation is applied to the presented code a number of times equal to the number of previous permutations of the presented code, the parts that correspond to the permuted secret and presented codes (CST, CPT) are compared two-by-two, and the permuted secret code (CST) is memorised in the processing means (CA).

11. Method according to any one of the claims from 1 to 10, according to which the transformation function (FT) to which the secret code (CS) is applied is homomorphic to the transformation function (FT') to which the presented code (CP) is applied.

## Fig. 1

CARTE A PUCE

TE

TERMINAL D'ACCUEIL

LECTEUR

CLAVIER

CL

CP

LI

LE

BU

PROCESSEUR — PR

ROM OS,FT,FT' — MO

EEPROM CST,NA — MNV

RAM CP — MA

CA

**Fig. 2**

Acquisition CA

Utilisation CA
dans CA

| Implémenter FT dans MO | E1 |
| Attribuer CS à CA | |
| Générer NA | |

CST=FT(CS)
ou CST=FT(CS,NA) — E2

Mémoriser
CST,NA dans MNV
effacer CS — E3

Composer CP dans TE — E4

$TE \rightarrow [CP] \rightarrow MA$ — E5

ou

E6a

Produire NA'
$CST'=FT(CS',NA')$
$CPT=FT(CP,NA)$
$CPT'=FT(CPT,NA')$

E6
dans PR
CPT=FT(CP)
ou
CPT=FT(CP,NA)

E6b
$CST_i =FT(CST_{i-1})$
$CPT_i =FT^i (CP)$
ou
$CPT_i =FT(CPT_{i-1},CP)$

E7a
dans PR
$CST'=CPT'$?     non

E7
dans PR
CST=CPT?     non

E7b
dans PR
$CST_i =CPT_i$ ?

oui     oui     Refus     oui

Fonctionnalités
de CA accessibles